# EUROPEAN PATENT APPLICATION

(11) **EP 1 168 278 A1**
(43) Date of publication of application: **02.01.2002**
(21) Application number: 00650071.4
(22) Date of filing: 21.06.2000
(51) Int. Cl.: G09B 23/34

(54) **A simulator**

(71) Applicant: Pharmabotics Limited, Petersfield, West Sussex GU31 5HA (GB)
(72) Inventor: Rollason, Anthony, Witley, Surrey GU8 5LY (GB)
(74) Representative: O'Brien, John Augustine

(57) **Abstract**

A simulator (1) for training in medical and surgical procedures comprises a lower sink unit (2) for receiving specimens with an intermediate cover (3) over the sink. The intermediate cover (3) has an access opening (9) and a simulated skin layer (4) overlies the access opening (9) in the intermediate cover (3). Procedures are carried out through the skin layer (4) on the specimens in the sink unit (2).

## Description

### Introduction

The invention relates to a simulator for training in surgical or clinical procedures.

In the medical field it is necessary for students, doctors and surgeons to be able to practise surgical and clinical techniques. Conventional techniques for training often involve the use of live animal specimens. Using live animal tissues experience is gained in minimal access techniques and the correct use of medical devices. However, the use of laboratory animals for surgical training raises serious questions of ethical practice and is expensive.

Various different training simulators have been developed to aid students, doctors and surgeons in acquiring surgical skills prior to application in actual clinical practise. Simulation models are constructed in such a way that training and operations may be performed in an artificial anatomically correct body cavity on the open abdomen or other areas with minimal invasive methods. This is achieved in that the anatomical and topographical shape and surface of the inside of the human or animal is reproduced at least in part. The outside of the model also corresponds at least in part to the true anatomical shape or structure. Objects, artificial organs or organic implants are inserted and/or implanted in the cavity or cavities of the model.

Various anatomical simulators of this type are described in GB-A-2338582, GB-A-2324902 (Simutech Ltd); WO-A-9858358, WO-A-9425948 (Limbs & Things Ltd); EP-A-0624861 (Szinicz); WO-A-9642076 (Simulab Corp); WO-A-9321619 (Neumann); WO-A-9406109 (Wallwiener); WO-A-9105320 (Cabehko et al); and WO-A-9422122, (Triangle Research Development Corp). These prior documents describe various anatomical simulators for use in for example videoendoscopic training, microsurgery or endovascular training and the like. Some systems described are attached to electronic sensor systems or have pumps simulating blood circulation.

One of the problems with such simulators is that they do not provide the realistic touch provided by live tissue.

There therefore exists a need for an improved body simulator which is more realistic than conventional simulators.

### Statements of Invention

According to the invention there is provided a simulator for training in medical and surgical procedures comprising:
a lower sink unit for receiving specimens;
an intermediate cover over the sink, the intermediate cover having an access opening; and
a simulated skin layer overlying the access opening in the intermediate cover for carrying out procedures through the skin layer on the specimens in the sink unit.

Preferably the simulator includes an outer lid having an access opening at least partially in register with the access opening in the intermediate cover.

Most preferably the simulated skin layer is located between the intermediate cover and the outer lid.

In one embodiment of the invention the lower sink unit includes a drain with a removable plug.

In a further embodiment of the invention the lower sink unit is hermetically sealed to the intermediate cover to provide a large internal working area.

Preferably the outer lid is releasably mounted to the lower sink unit.

Preferably the outer lid is in the shape of the human torso.

In one embodiment of the invention the simulated skin is in the form of a sheet of gel material. Preferably the skin layer comprises an upper layer of reinforced polyurethane or thermoplastic gel, a middle layer of thermoplastic gel and a second layer of thermoplastic gel.

### Detailed description of the drawings

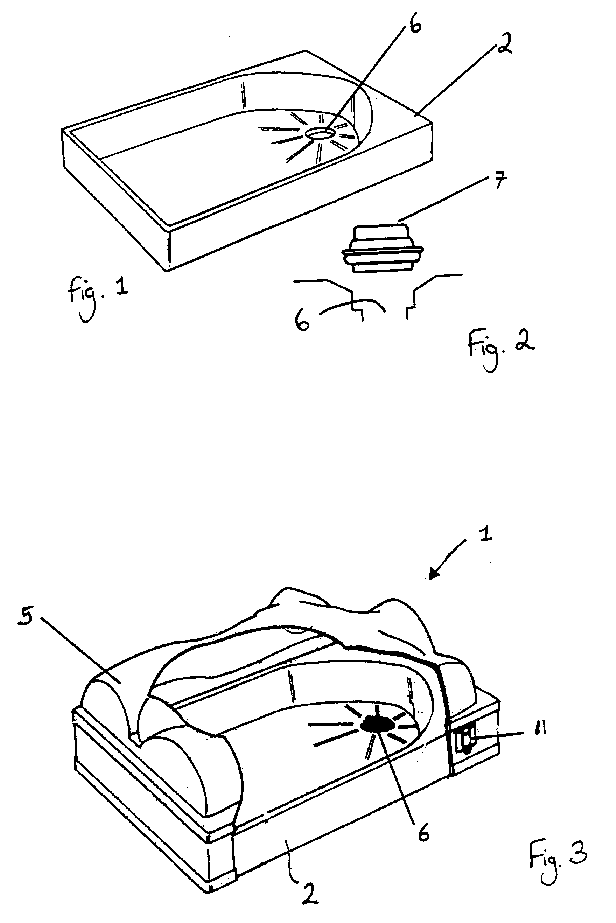

Fig. 1 is a perspective view of a lower sink unit of a training device of the invention;
Fig. 2 is a close up view of the drain and twist-tight plug of the lower sink unit of Fig. 1;
Fig. 3 is a perspective partially cut away view of the lower sink unit with the outer lid attached;
Fig. 4 is a perspective partially cut away view as in Fig. 3 with the internal cavity filled with specimens;
Fig. 5 is a perspective view of the lower sink unit showing the expulsion of the specimen/tissue; and

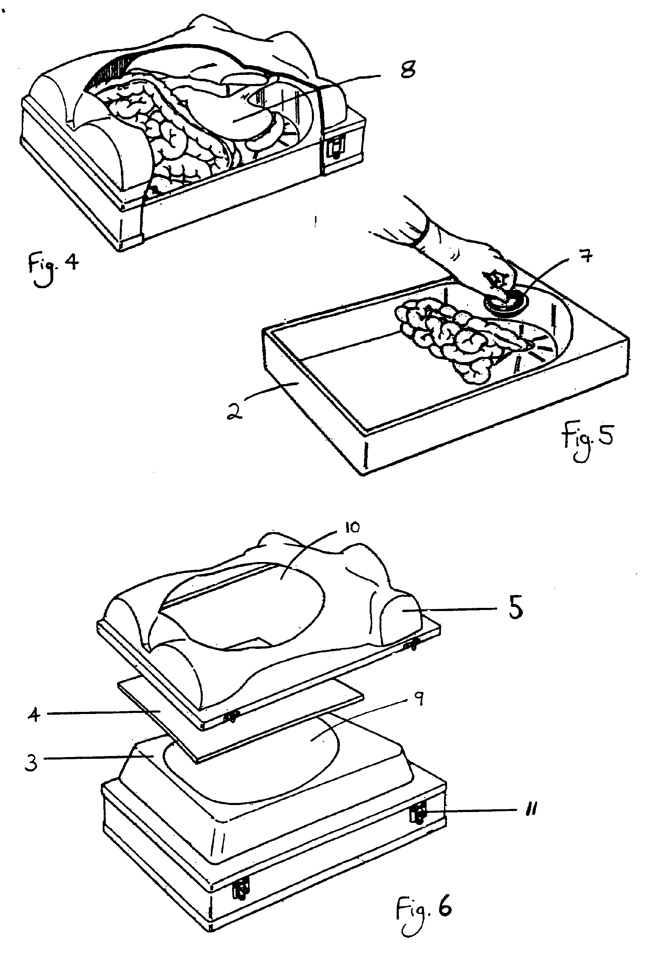

Fig. 6 is an exploded view of the training device of the invention.

### Detailed description

Referring to the drawings there is provided a simulator 1 for training in medical and surgical procedures. The simulator 1 comprises a lower sink unit 2 and an intermediate cover 3 hermetically sealed to the lower sink unit 2. The intermediate cover 3 has an access opening 9 through which animal specimens/organs 8 are inserted into the internal cavity area and arranged in a manner closely resembling human organ topology as illustrated in Fig. 4. A simulated skin layer 4 overlies the access opening 9. An outer lid 5 having the shape of the human torso is releasably mounted to the intermediate cover 3 and has an access opening 10 in register with the access opening 9 in the intermediate cover 3.

The lower sink unit 2 is a smooth sided and sloped vessel having a wide drain 6 of approximately 9-10 cm in diameter and a twist-tight drain-plug 7 which provides an airtight lock and prevents drainage while in use. The lower sink unit 2 is hermetically sealed with the intermediate cover 3 providing an internal cavity area.

The drain 6 in the lower sink unit 2 is large enough to allow expulsion of the tissue for disposal as illustrated in Fig. 4. The lower sink unit 2 may be placed over a sink or sluice and the tissue flushed out through the drain 6 with a high pressure hose with minimal human contact. The unit is smooth sided and does not have any additional attachments on which pieces of tissue can snag and cause a potential health hazard. The unit is capable of withstanding all present sterile cleansing methods and can be sterilised in an autoclave or in cold fluids.

Between each use all specimen tissue is removed and the training device is fully sterilised.

The simulated skin layer 4 is described in detail in our PCT/GB99/04227 the entire contents of which are herein incorporated. The simulated skin layer 4 comprises a 20 x 18 inch sheet of gel coated polyurethane up to one inch or more thick, representing smooth skin with fatty tissue. It bridges the access opening of the intermediate cover 9. The thickness of the simulated skin may be varied depending on the amount of fatty tissue required. With increased obesity becoming a norm the thickness of the fatty layer can be changed to suit the requirements, for example to simulate normal or obese patients. The simulated skin used is a single-sided abdominal skin pad. In order to access the specimens in the internal cavity students have to cut through the fatty tissue layer. The incisions in the artificial skin surface may be closed using standard wound closure techniques such as suturing, stapling, use of adhesive appliances and gluing.

The outer lid 5 is releasably attached to the lower sink unit 2 by clip means 11. The outer lid 5 is made from 2mm plastic sheeting and vacuum formed from an original torso sculptured for the purpose of demonstrating normal anatomy. From the neck down to the pubic region, it measures approximately 30 inches long x 24 wide 10 high (760mm long x 610mm wide x 255mm high).

The simulated skin layer 4 is confined between the intermediate cover 3 and the outer lid 5 and bridges the access opening 9 in the intermediate cover 3. The outer lid 5 forms an airtight grip over the soft-tissue skin from which the torso can be insufflated.

The training device may be presented in variables of white or grey plastic to absorb higher or lower light levels.

We have developed a body torso simulator which provides for a more realistic training environment. The training device of the present invention provides a body torso simulator which is a life-sized model with a very spacious internal working area for receiving animal specimens/organs, which are arranged in a manner closely resembling human organ topology. From the outside it appears to be a body situated on a self-contained box. The training device of the present invention provides sufficient space in which to work with comfort and afterwards to be able to clean efficiently utilising contemporary methods of sterile hygiene.

The invention is not limited to the embodiments hereinbefore described which may be varied in detail.

## Claims

1. A simulator for training in medical and surgical procedures comprising:
a lower sink unit for receiving specimens;
an intermediate cover over the sink, the intermediate cover having an access opening; and
a simulated skin layer overlying the access opening in the intermediate cover for carrying out procedures through the skin layer on the specimens in the sink unit.

2. A simulator as claimed in claim 1 including an outer lid having an access opening at least partially in register with the access opening in the intermediate cover.

3. A simulator as claimed in claim 2 wherein the simulated skin layer is located between the intermediate cover and the outer lid.

4. A simulator as claimed in any preceding claim wherein the lower sink unit includes a drain with a removable plug.

5. A simulator as claimed in any preceding claim wherein the lower sink unit is hermetically sealed to the intermediate cover to provide a large internal working area.

6. A simulator as claimed in any of claims 2 to 5 wherein the outer lid is releasably mounted to the lower sink unit.

7. A simulator as claimed in any of claims 2 to 5 wherein the outer lid is in the shape of the human torso.

8. A simulator as claimed in any preceding claim wherein the simulated skin is in the form of a sheet of gel material.

9. A simulator as claimed in claim 8 wherein the skin layer comprises an upper layer of reinforced polyurethane or thermoplastic gel, a middle layer of thermoplastic gel and a second layer of thermoplastic gel.
